# FASCICULE DE BREVET EUROPEEN

(11) **EP 2 825 404 B1**
(45) Date de publication et mention de la délivrance du brevet: **18.05.2016**
(21) Numéro de dépôt: 13712877.3
(22) Date de dépôt: 01.03.2013
(51) Int. Cl.: B60K 1/04, B60S 5/06, H01M 2/10

(54) **SYSTÈME DE VERROUILLAGE/DÉVERROUILLAGE D'UN OBJET SUR UNE STRUCTURE À ÉLÉMENTS D'APPUI ET D'ALIGNEMENT INTÉGRÉS AUX OUTILS**
VERRIEGELUNGS- UND ENTRIEGELUNGSSYSTEM EINES GEGENSTANDS AN EINER STRUKTUR, MIT IN DIE WERKZEUGE INTEGRIERTEN ANSCHLAG- UND AUSRICHTELEMENTEN
LOCKING/UNLOCKING SYSTEM OF AN OBJECT ON A STRUCTURE, WITH ABUTMENT AND ALIGNMENT ELEMENTS INTEGRATED IN THE TOOLS

(30) Priorité: 15.03.2012 FR 1252312
(43) Date de publication de la demande: 21.01.2015
(73) Titulaire: Renault S.A.S., 92100 Boulogne-Billancourt (FR)
(72) Inventeur: POILLOT, Jacques, F-784540 Villepreux (FR); MULATO, Gilles, F-92320 Chatillon (FR); TRENTIN, Stéphane, F-91170 Viry-Châtillon (FR); ESCANDE, Bruno, F-78790 Septeuil (FR)
(86) Numéro de dépôt international: PCT/FR2013/050439
(87) Numéro de publication internationale: WO 2013/153300

(56) Documents cités:
- FR-A1- 2 946 572
- FR-A1- 2 952 334
- FR-A1- 2 964 352
- US-A- 5 612 606

## Description

### Domaine technique de l'invention

L'invention concerne un système de verrouillage et/ou de déverrouillage d'un objet, tel qu'une batterie d'alimentation d'un moteur d'entraînement d'un véhicule automobile électrique ou hybride, en dessous d'une structure, telle qu'un châssis du véhicule, le système comportant une pluralité d'outils permettant d'actionner des verrous de fixation de l'objet sur la structure.

L'invention a pour objet aussi un dispositif de montage et/ou de démontage de l'objet en dessous de la structure associant un tel système de verrouillage et/ou de déverrouillage et une pluralité de verrous de fixation objet/structure. Elle concerne aussi un procédé de démontage et un procédé de montage de l'objet en dessous de la structure.

### État de la technique

Certains véhicules automobiles, comme les véhicules électriques ou hybrides, comprennent un conteneur d'énergie d'alimentation d'un moteur électrique d'entraînement de type batterie électrique d'alimentation. Dans la suite de la description, le terme « batterie » sera utilisé pour une raison de simplification, comme désignant au sens large tout conteneur d'alimentation électrique d'un moteur électrique d'entraînement d'un véhicule. Il peut se révéler intéressant d'échanger cette batterie lorsque son niveau d'énergie est faible contre une nouvelle batterie chargée. Ceci peut être fait dans une station d'échange, comme par exemple une station similaire à une station-service pour le remplissage des réservoirs associés aux moteurs thermiques.

On connaît du document US2011223459 une méthode de montage et de démontage d'une batterie sur un véhicule au moins partiellement électrique. Plusieurs unités de verrouillage sont montées sur le véhicule, sont contrôlables séparément et comprennent chacune un verrou de fixation configuré pour se coupler à la batterie. La méthode comprend un actionnement de chacune des unités de verrouillage pour faire pivoter le verrou respectif pour engager ou désengager avec la batterie. La méthode comprend la mesure d'une position de chaque verrou des unités de verrouillage pour contrôler individuellement chacune des unités de verrouillage en fonction de la position de son verrou respectif pour synchroniser les positions de tous les verrous. Un inconvénient majeur de cette solution est l'absence de mise en assiette du véhicule, ce qui nécessite d'embarquer sur le véhicule un mécanisme d'actionnement complexe (au moins un moteur et plusieurs arbres de transmission) pour libérer la batterie de manière autonome. Le coût de cette solution est très élevé, souvent prohibitif et non valorisable pour le client. Cette complexité rend la solution difficilement fiable et implique que son fonctionnement est peu robuste.

Une difficulté supplémentaire pour la mise en place d'un tel concept d'échange de batteries réside dans le fait qu'il existe une multitude de véhicules automobiles pouvant comprendre des batteries de types différents, fixées de manière différentes sur le véhicule automobile. Or il n'est pas envisageable économiquement de multiplier les systèmes de montage et de démontage de ces différents types de batteries ni de mettre en place une solution manuelle en raison de son coût et du poids des batteries. Il existe donc un besoin d'une solution de montage/démontage qui soit universelle et qui puisse être standardisée.

Un système selon le préambule de la revendication 1 est connu du document FR-A-2 952 334.

### Objet de l'invention

Pour rendre possible un développement aisé des solutions d'échange de batteries, il est nécessaire de rendre fiable, robuste, flexible et universel le fonctionnement de ces solutions, tout en limitant leur coût.

Le but de la présente invention est de fournir une solution de montage et/ou de démontage qui permettent de remédier aux problèmes évoqués précédemment. En particulier, l'invention propose une solution simple, fiable et robuste, flexible et universelle tout en étant économique.

Un premier aspect de l'invention concerne un système comme défini dans la revendication 1.

Les éléments d'appui peuvent permettre un soulèvement de la structure selon un axe vertical à une hauteur indépendante de la structure.

Les éléments d'alignement peuvent être configurés de sorte à coopérer avec des éléments de centrage que comporte l'objet, les éléments d'alignement s'insérant dans les éléments de centrage et/ou les éléments de centrage s'insérant dans les éléments d'alignement.

Chaque outil peut comprendre des éléments de déblocage destinés à actionner un mécanisme de sécurité du verrou de fixation entre une configuration de blocage dans laquelle le passage du verrou de fixation d'une configuration à l'autre est inhibé et une configuration de déblocage dans laquelle le passage du verrou de fixation d'une configuration à l'autre est autorisé.

Les éléments d'appui et/ou les éléments de déblocage peuvent être constitués par une extrémité supérieure d'au moins l'un des éléments d'alignement.

Les éléments de déblocage peuvent être configurés de sorte que la mise en contact des éléments d'appui contre le dessous de la structure, lors de la mise en assiette de la structure et éventuellement de son soulèvement, entraîne automatiquement l'actionnement, par les éléments de déblocage, du mécanisme de sécurité vers sa configuration de déblocage.

Les éléments d'appui peuvent être configurés pour venir en contact, lors de la mise en assiette de la structure et éventuellement de son soulèvement, avec un support de verrou interposé entre le verrou de fixation et la structure.

Chaque outil peut comprendre un élément de portage destiné à supporter l'objet après sa libération par les verrous de fixation par rapport à la structure.

Le système peut aussi comprendre des éléments élévateurs sur lesquels les outils sont montés, les éléments élévateurs étant configurés pour déplacer les outils entre :
- une position inférieure disposée sensiblement à proximité ou en dessous d'un convoyeur assurant une fourniture d'objets à monter sur la structure tels que des batteries électriquement chargées et une évacuation d'objets démontés de la structure tels que des batteries électriquement déchargées,
- et une position supérieure où les outils peuvent être en contact avec la structure pour assurer sa mise en assiette et éventuellement son soulèvement et peuvent actionner les verrous de fixation.

Un deuxième aspect de l'invention concerne un dispositif de montage et/ou de démontage d'un objet, tel qu'une batterie d'alimentation d'un moteur d'entraînement d'un véhicule automobile électrique ou hybride, en dessous d'une structure, telle qu'un châssis du véhicule, le dispositif comportant un tel système de verrouillage et/ou de déverrouillage et une pluralité de verrous de fixation solidaires de l'objet et/ou de la structure, actionnables chacun entre une configuration de verrouillage bloquant l'objet sur la structure et une configuration de déverrouillage libérant l'objet par rapport à la structure, et agencés de sorte que les éléments de verrouillage et/ou de déverrouillage de chaque outil du système de verrouillage et/ou de déverrouillage actionnent l'un des verrous de fixation pour le faire varier de configuration.

Un troisième aspect de l'invention concerne un procédé de démontage d'un objet, tel qu'une batterie d'alimentation d'un moteur d'entraînement d'un véhicule automobile électrique ou hybride, en dessous d'une structure, telle qu'un châssis du véhicule, le procédé comportant :
- une étape d'alignement d'une pluralité d'outils par rapport à l'objet porté par la structure, selon un axe longitudinal de la structure et selon un axe transversal de la structure ;
- une étape de mise en assiette de la structure autour de l'axe longitudinal de la structure et/ou autour de l'axe transversal de la structure, par appui des outils contre le dessous de la structure, et éventuellement de soulèvement de la structure selon un axe vertical de la structure ;
- une étape de déverrouillage dans laquelle chaque outil actionne un verrou de fixation solidaire de l'objet et/ou de la structure d'une configuration de verrouillage bloquant initialement l'objet sur la structure vers une configuration de déverrouillage libérant l'objet par rapport à la structure.

Enfin un quatrième aspect de l'invention concerne un procédé de montage d'un objet, tel qu'une batterie d'alimentation d'un moteur d'entraînement d'un véhicule automobile électrique ou hybride, en dessous d'une structure, telle qu'un châssis du véhicule, le procédé comportant :
- une étape d'alignement d'une pluralité d'outils par rapport à l'objet, selon un axe longitudinal de la structure et selon un axe transversal de la structure ;
- une étape de mise en assiette de la structure autour de l'axe longitudinal de la structure et/ou autour de l'axe transversal de la structure, par appui des outils contre le dessous de la structure, et éventuellement de soulèvement de la structure selon un axe vertical de la structure ;
- une étape de verrouillage dans laquelle chaque outil actionne un verrou de fixation solidaire de l'objet et/ou de la structure d'une configuration de déverrouillage libérant initialement l'objet par rapport à la structure vers une configuration de verrouillage bloquant l'objet sur la structure.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- les figures 1 à 8 illustrent différentes étapes successives d'une solution selon l'invention de démontage d'une batterie en dessous d'un châssis de véhicule,
- et les figures 9 à 14 illustrent différentes étapes successives d'une solution selon l'invention de montage d'une batterie en dessous d'un châssis de véhicule.

### Description de modes préférentiels de l'invention

L'invention concerne généralement le domaine du montage et/ou du démontage d'un objet en dessous d'une structure. Les principes de l'invention vont être décrits en relation avec une application particulière non limitative où l'objet est une batterie d'alimentation 10 d'un moteur d'entraînement d'un véhicule automobile électrique ou hybride et où la structure est un châssis 11 ou une caisse du véhicule. Toutefois, l'invention peut trouver application dans d'autres domaines où un objet doit être monté et/ou démonté en dessous d'une structure.

Dans cette application particulière où la structure est un châssis ou une caisse de véhicule, la description est faite en référence à un repère orthonormé (X, Y, Z) associé classiquement à un véhicule automobile, dans lequel l'axe X est la direction longitudinale avant-arrière du véhicule dirigée vers l'arrière, l'axe Y est la direction transversale droite-gauche qui est horizontale et perpendiculaire à X, dirigée vers la droite, et l'axe Z est la direction verticale dirigée vers le dessus.

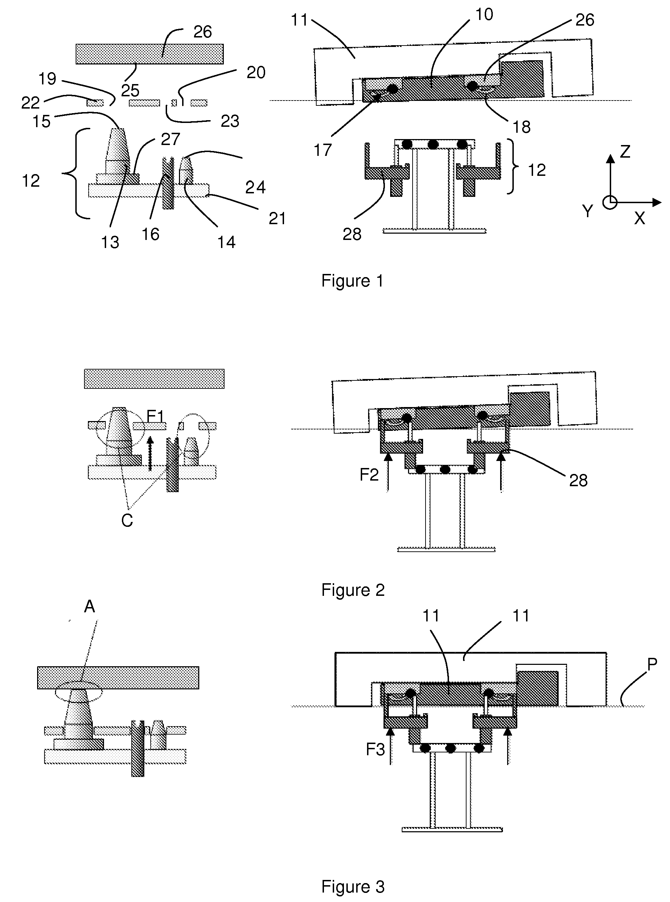

Sur chacune des figures 1 à 14, la partie de droite de la figure montre schématiquement une structure et un exemple de dispositif de montage et/ou de démontage selon l'invention. La partie de gauche de chaque figure illustre en détails la coopération entre l'un des outils du système de verrouillage et/ou de déverrouillage que comporte ce dispositif de montage et/ou de démontage, et la structure et/ou l'objet.

Selon une caractéristique essentielle de l'invention, un système de verrouillage et/ou de déverrouillage de l'objet (ici la batterie d'alimentation 10) en dessous de la structure (ici le châssis 11 du véhicule) comporte une pluralité d'outils 12 d'actionnement (préférentiellement au nombre de quatre, répartis selon un cadre X, Y) où chacun de ces outils 12 comprend :
- des éléments d'alignement 13, 14 dudit outil 12 par rapport à l'objet selon l'axe longitudinal X de la structure et selon l'axe transversal Y de la structure ;
- des éléments d'appui 15 contre le dessous 25 de la structure permettant une mise en assiette de la structure, notamment dans un plan (X, Y), autour de l'axe longitudinal X de la structure et/ou autour de l'axe transversal Y de la structure, et éventuellement un soulèvement de la structure selon l'axe vertical Z de la structure à une hauteur préférentiellement indépendante de la structure ;
- des éléments 16 de verrouillage et/ou de déverrouillage destinés à actionner un verrou de fixation 17 entre une configuration de verrouillage bloquant l'objet sous la structure et une configuration de déverrouillage libérant l'objet par rapport à la structure.

On entend par « mise en assiette » une opération consistant à appliquer à la structure des efforts mécaniques permettant d'orienter la structure selon une orientation spatiale donnée (incluse ou non) par rapport au plan (X, Y), cette orientation donnée étant en outre indépendante du type de structure et des conditions de chargement éventuel du véhicule.

Ainsi, chacun des outils 12 du système est destiné à coopérer avec un verrou 17 qui lui est associé. Préférentiellement, chaque verrou 17 comporte une vis sans fin entraînant en rotation un pignon formant un crochet 18. La forme de chaque crochet 18 permet de comprimer progressivement l'objet (batterie 10) contre le dessous de la structure (châssis 11), éventuellement avec interposition d'éléments élastiques de rappel non représentés (par exemple des plots caoutchoucs) lorsque la vis sans fin, dont la tête est accessible par le dessous du verrou 17 auquel la vis appartient, est actionnée en rotation par utilisation des éléments 16 de verrouillage/déverrouillage qui sont dans ce cas un outil de vissage/dévissage manuel ou automatisé.

Dans un mode de réalisation présentant l'avantage de sa simplicité et de son efficacité, les éléments d'alignement 13, 14 sont configurés de sorte à coopérer par introduction ou insertion avec des éléments de centrage 19, 20 que comporte l'objet, c'est-à-dire que les éléments d'alignement 13, 14 s'insèrent dans les éléments de centrage 19, 20 et/ou les éléments de centrage 19, 20 s'insèrent dans les éléments d'alignement 13, 14. Dans la variante particulière illustrée, les deux éléments d'alignement 13, 14 de chacun des outils 12 sont constitués par des pilotes au moins partiellement coniques pour un auto-centrage, en saillie d'une embase 21 solidaire de l'outil 12. Ces deux pilotes viennent s'insérer dans deux trous (ou oreilles, ou lumières ou équivalents) constitutifs des éléments de centrage 19, 20, respectivement, ménagés dans un support de batterie 22 (aussi connu sous le nom de brancard) considéré comme solidaire de la batterie 10. Autrement dit, les trous permettant le centrage des pilotes (par coopération par introduction) sont solidaires de l'objet. L'aménagement d'au moins deux pilotes au niveau de chacun des outils 12 permet en outre de bloquer la rotation selon Z de l'objet par rapport à l'outil 12 en cas de coopération par introduction.

En complément, le support de batterie 22 peut être pourvu d'un trou 23 supplémentaire pour le passage des éléments 16 de verrouillage/déverrouillage à travers l'objet à monter sur la structure, pour donner accès au verrou 17 à actionner. L'existence et la nature de ce trou 23 dépend de la nature des éléments 16, elle-même fonction de la nature des verrous 17.

Dans un mode de réalisation particulier, chaque verrou 17 est équipé d'un mécanisme de sécurité capable de varier entre une configuration de blocage dans laquelle le passage du verrou de fixation 17 d'une configuration à l'autre est inhibé et une configuration de déblocage dans laquelle le passage du verrou de fixation 17 d'une configuration à l'autre est autorisé. Dans ce cas particulier, chaque outil 12 peut comprendre des éléments de déblocage 24 destinés à actionner le mécanisme de sécurité du verrou de fixation de la configuration de blocage à la configuration de déblocage, ou inversement.

Il ressort de ce qui précède que chaque outil 12 intègre les éléments d'alignement 13, 14 selon X et Y par rapport à l'objet, les éléments d'appui 15 contre le dessous de la structure selon Z, les éléments 16 de verrouillage/déverrouillage des verrous 17 portés par la structure et/ou par l'objet, et éventuellement les éléments de déblocage 24.

Avantageusement, par simplicité, les éléments d'appui 15 et/ou les éléments de déblocage 24 sont constitués par une extrémité supérieure (selon Z) d'au moins l'un des éléments d'alignement 13, 14. Dans la variante illustrée, les éléments d'appui 15 sont constitués par l'extrémité supérieure de l'élément d'alignement 13 tandis que les éléments de déblocage 24, conçus ici pour agir par une poussée verticale, sont constitués par l'extrémité supérieure de l'élément d'alignement 14.

Dans un mode particulier, les éléments de déblocage 24 sont configurés de sorte que la mise en contact des éléments d'appui 15 contre le dessous 25 de la structure, lors de la mise en assiette de la structure par rapport au plan (X, Y) et éventuellement de son soulèvement selon la direction Z, entraîne automatiquement l'actionnement, par les éléments de déblocage 24, du mécanisme de sécurité vers sa configuration de déblocage.

Préférentiellement, les éléments d'appui 15 sont configurés pour venir en contact, lors de la mise en assiette de la structure et éventuellement de son soulèvement, avec un support de verrou 26 interposé entre le verrou de fixation 17 et la structure. Autrement dit, le support de verrou 26 permet de relier un verrou 17 donné à la structure (i.e. au châssis 11 de véhicule). Le dessous 25 de la structure contre lequel les éléments d'appui 15 viennent en appui au moment de la mise en assiette de la structure et éventuellement de son soulèvement est formé en pratique par une face inférieure du support de verrou 26. De telles caractéristiques permettent de rendre la solution indépendante du type de structure, ce qui la rend facilement standardisable.

Pour pouvoir supporter la batterie 10 après sa libération par les verrous 17, chaque outil 12 comprend un élément de portage 27 destiné à supporter l'objet (batterie 10) après sa libération par les verrous de fixation 17 par rapport à la structure (châssis 11). Dans la variante illustrée, l'élément de portage 27 est formé simplement par un épaulement prévu sur le pilote constitutif de l'élément d'alignement 13, par exemple à proximité de sa zone de raccordement à l'embase 21.

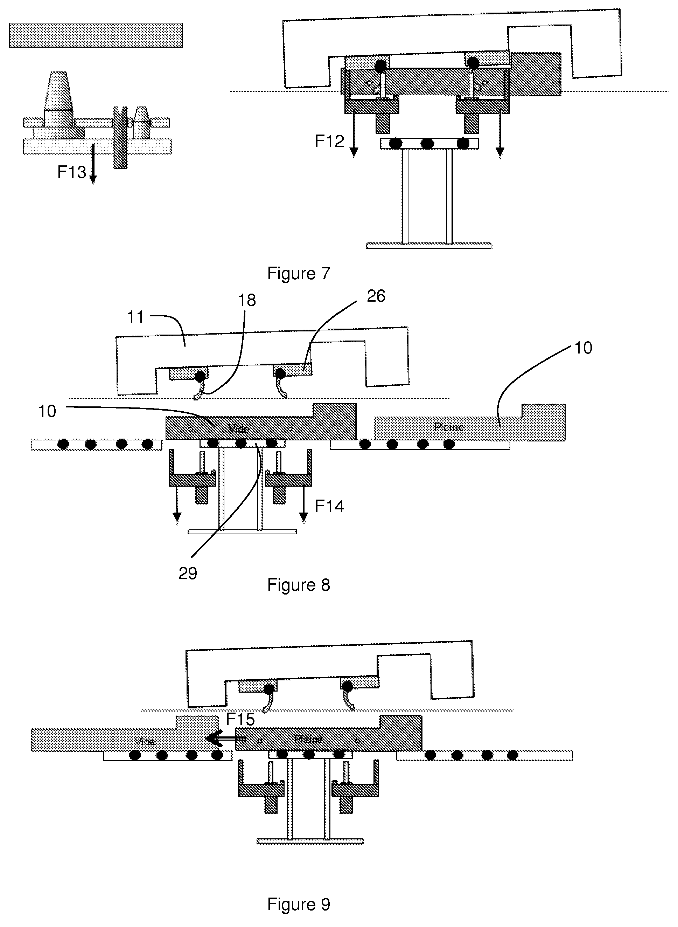

Pour la mise en oeuvre des outils 12 impliquant un déplacement selon Z (ce déplacement étant nécessaire au moins pour l'opération d'alignement, pour l'opération de mise en assiette et éventuellement pour l'opération de soulèvement), le système de verrouillage et/ou de déverrouillage qui comprend une pluralité de tels outils 12, comprend en outre des éléments élévateurs 28 sur lesquels les outils 12 sont montés, les éléments élévateurs 28 étant configurés pour déplacer (individuellement ou collectivement) les outils 12 entre :
- une position inférieure (figures 8, 9, 14) disposée sensiblement à proximité ou en dessous d'un convoyeur 29 assurant une fourniture d'objets à monter sur la structure tels que des batteries électriquement chargées dites « pleine » et une évacuation d'objets démontés de la structure tels que des batteries électriquement déchargées dites « vide » (voir figure 9),
- et une position supérieure où les outils 12 peuvent être en contact avec la structure pour assurer sa mise en assiette (X, Y) et éventuellement son soulèvement selon Z et peuvent actionner les verrous de fixation 17.

Le système de verrouillage et/ou de déverrouillage précédemment décrit peut entrer plus généralement dans la constitution d'un dispositif de montage et/ou de démontage de l'objet en dessous d'une structure, comprenant en outre une pluralité de tels verrous de fixation 17 solidaires de l'objet et/ou de la structure. Les verrous 17 sont actionnables chacun entre une configuration de verrouillage bloquant l'objet sur la structure et une configuration de déverrouillage libérant l'objet par rapport à la structure. Les verrous 17 sont agencés de sorte que les éléments 16 de verrouillage et/ou de déverrouillage de chaque outil 12 du système de verrouillage et/ou de déverrouillage actionnent l'un des verrous de fixation 17 pour le faire varier de configuration.

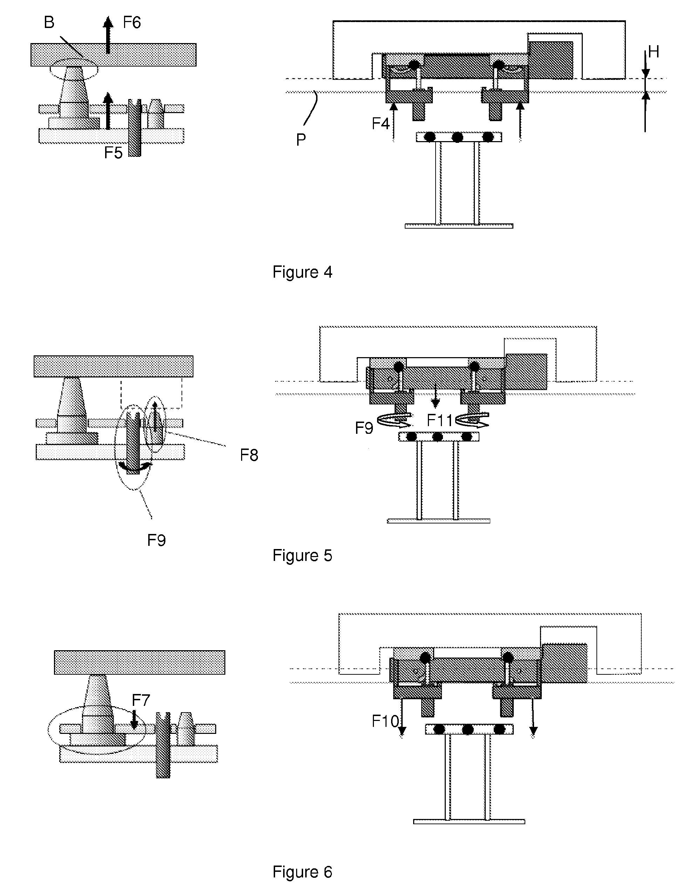

Un exemple de fonctionnement du système de verrouillage et/ou de déverrouillage, et plus généralement du dispositif de montage et/ou de démontage, est décrit ci-dessous en référence aux figures 1 à 14 :
Les figures 1 à 8 illustrent différentes étapes successives lors du démontage d'une batterie 10 en dessous d'un châssis 11 de véhicule. D'une manière générale, décrite plus en détails ci-après, le démontage d'un objet, tel qu'une batterie 10, en dessous d'une structure, telle qu'un châssis 11 de véhicule, comporte :
   - une étape d'alignement (figure 2) d'une pluralité d'outils 12 par rapport à l'objet (i.e. la batterie 10 ou en particulier son support 22) porté par la structure (i.e. le châssis 11), selon l'axe longitudinal X et selon l'axe transversal Y de la structure ;
   - une étape de mise en assiette (figure 3) de la structure autour de l'axe longitudinal X et/ou autour de l'axe transversal Y, par appui des outils 12 contre le dessous 25 de la structure, et éventuellement une étape de soulèvement (figure 4) de la structure selon l'axe vertical Z par appui des outils 12 contre le dessous 25 de la structure ;
   - une étape de déverrouillage (figures 5 et 6) dans laquelle chaque outil 12 actionne un verrou de fixation 17 solidaire de l'objet et/ou de la structure d'une configuration de verrouillage bloquant initialement l'objet sur la structure vers une configuration de déverrouillage libérant l'objet par rapport à la structure.

Partant d'une situation initiale telle que représentée sur la figure 1 où la batterie 10 et son support 22 sont portés par le châssis 11 de véhicule grâce aux verrous 17 adoptant leurs configurations de verrouillage, les outils 12 sont déplacés F1 selon Z vers le dessus jusqu'à faire coopérer par introduction C les éléments d'alignement 13, 14 de l'outil 12 avec les éléments de centrage 19, 20 solidaires du support 22 de batterie (figure 2). Le déplacement F1 des outils 12 résulte d'un déplacement F2 correspondant des éléments élévateurs 28. L'introduction des éléments d'alignement 13, 14 dans les éléments de centrage 19, 20 permet d'aligner la pluralité d'outils 12 par rapport à la batterie 10 (ou en particulier son support 22) portée par le châssis 11 grâce aux verrous 17, cet alignement se pratiquant selon l'axe longitudinal X et selon l'axe transversal Y. Le châssis 11 n'est alors éventuellement pas correctement positionné par rapport à un plan horizontal P orienté selon (X, Y), la configuration du véhicule, et donc du châssis, ne dépendant que de ses propres conditions (hauteur propre, chargement etc...).

Puis, les éléments élévateurs 28 subissent un déplacement supplémentaire F3 (figure 3) selon Z vers le dessus, de sorte à déplacer de manière synchrone les outils 12 pour assurer une mise en assiette (figure 3) du châssis autour de l'axe longitudinal X et/ou autour de l'axe transversal Y, par appui A des outils 12 contre le dessous 25 de la structure, venant orienter le châssis par rapport au plan P selon une orientation prédéterminée (alignée ou non) indépendante du châssis 11 et de son chargement éventuel.

Puis, les éléments élévateurs 28 subissent un éventuel déplacement supplémentaire F4 (figure 4) selon Z vers le dessus, de sorte à déplacer de manière synchrone les outils 12 pour déplacer F5 les outils 12 selon Z vers le dessus jusqu'à faire assurer un soulèvement F6 de la batterie 10 et du châssis 11 selon l'axe vertical Z, par appui B des outils 12 contre le dessous 25 de la structure, venant décaler F6 le châssis 11 par rapport au plan P à une hauteur H du plan P. Ainsi, la position de référence adoptée par le véhicule lors du démontage d'une batterie 10 peut avantageusement être indépendante de la nature du châssis et donc du véhicule et de la nature de la batterie, du sol etc...

En référence à la figure 5, les éléments 16 de déverrouillage de chaque outil 12 actionne le verrou de fixation 17 d'une configuration de verrouillage bloquant initialement la batterie 10 sur le châssis 11 vers une configuration de déverrouillage libérant la batterie 10 par rapport au châssis 11. Ce déverrouillage résulte par exemple d'une action de dévissage symbolisée par des flèches rotatives F9. Le châssis 11 reste à une hauteur H par rapport au plan P tandis que la batterie 10 s'abaisse F11 selon Z, sous l'action des crochets 18 qui pivotent vers le bas, lors du dévissage jusqu'à venir reposer F7 par gravité sur l'élément de portage 27 de l'outil 12 et provoquer une déconnexion pilotée de la batterie 10. Dans la variante représentée, l'actionnement du verrou 17 est conditionné au déblocage F8 du mécanisme de sécurité du verrou 17 par les éléments de déblocage 24.

Puis les éléments élévateurs 28 sont abaissés F10 selon Z (figure 6) de sorte que le châssis 11 s'abaisse également pour se rapprocher progressivement du plan P. Durant ces opérations, le contact entre les supports de verrou 26 et les éléments d'appui 15 est maintenu.

L'abaissement F12 des éléments élévateurs 28 est prolongé (figure 7) de sorte à déplacer F13 l'ensemble constitué par les outils 12 et la batterie 10 (ainsi que son support 22) jusqu'à une perte de contact entre les éléments d'appui 15 et le dessous 25 du châssis 11. La mise en assiette cesse et le véhicule (et donc le châssis 11) reprend une orientation quelconque et libre par rapport au plan P.

Enfin, en référence à la figure 8, les éléments élévateurs 28 sont abaissés F14 de sorte à venir déposer la batterie 10 sur le convoyeur 29 et adopter sa position inférieure. La batterie 10 déposée, théoriquement défaillante ou électriquement déchargée (« vide »), est évacuée F15 par le convoyeur 29.

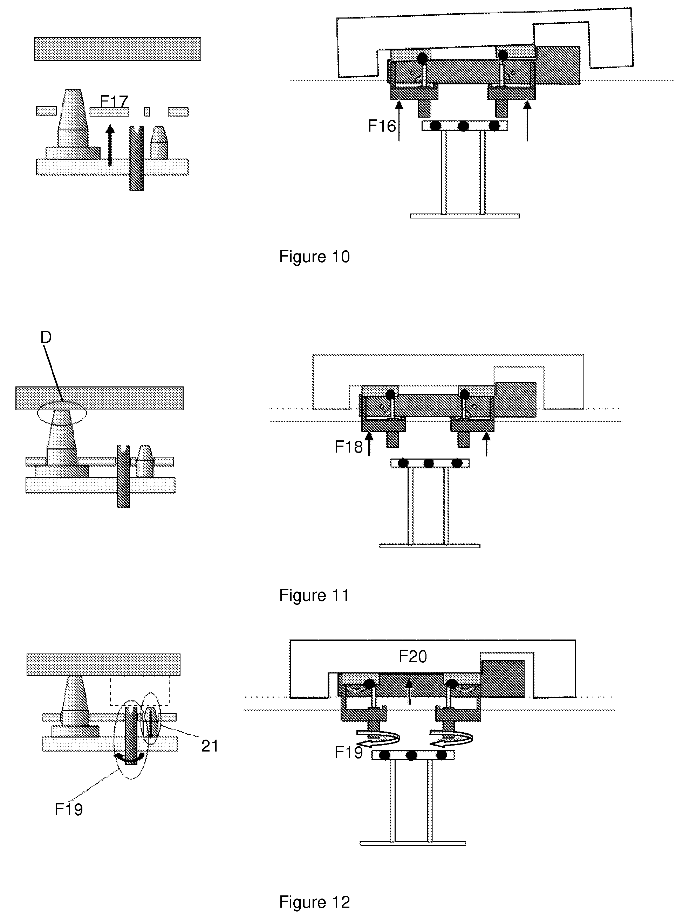

Les figures 9 à 14 illustrent ensuite différentes étapes successives lors du montage d'une batterie 10 en dessous d'un châssis 11 de véhicule. D'une manière générale, décrite plus en détails ci-après, le montage d'un objet, tel qu'une batterie 10, en dessous d'une structure, telle qu'un châssis 11 de véhicule, comporte :
- une étape d'alignement (figure 10) d'une pluralité d'outils 12 par rapport à l'objet (i.e. une batterie 10 ou en particulier son support 22), selon l'axe longitudinal X et selon un axe transversal Y ;
- une étape de mise en assiette (figure 11) de la structure autour de l'axe longitudinal X et/ou autour de l'axe transversal Y, par appui des outils contre le dessous de la structure, et éventuellement une étape de soulèvement (figure 11) de la structure selon l'axe vertical Z par appui des outils 12 contre le dessous de la structure ;
- une étape de verrouillage (figure 12) dans laquelle chaque outil 12 actionne un verrou de fixation 17 solidaire de l'objet et/ou de la structure d'une configuration de déverrouillage libérant initialement l'objet par rapport à la structure et permettant la mise en place de l'objet sur la structure vers une configuration de verrouillage bloquant l'objet sur la structure après sa mise en place.

Avant l'étape d'alignement, la batterie 10 électriquement chargée (« pleine ») est approvisionnée par le convoyeur 29 (figure 9). L'étape d'alignement (figure 10) entre les outils 12 et la batterie 10 reposant sur le convoyeur 29 se pratique automatiquement au moment de l'introduction des éléments d'alignement 13, 14 dans les éléments de centrage 19, 20 lors du déplacement F17 des outils 12 résultant d'un déplacement F16 des éléments élévateurs 28 vers le dessus.

Puis les éléments élévateurs 28 sont déplacés F18 vers le dessus pour une mise en assiette du châssis 11 par rapport au plan P et éventuellement un soulèvement du châssis 11 à une hauteur H du plan P (figure 11). Durant ces opérations, un contact D est établi entre les éléments d'appui 15 et le dessous 25 du châssis 11, notamment au niveau des supports de verrou 26.

En référence à la figure 12, les éléments 16 de verrouillage de chaque outil 12 actionne le verrou de fixation 17 associé d'une configuration de déverrouillage libérant initialement la batterie 10 par rapport au châssis 11 vers une configuration de verrouillage bloquant la batterie 10 sur le châssis 11. Ce verrouillage résulte par exemple d'une action de vissage symbolisée par des flèches rotatives F19. Le châssis 11 reste à une hauteur H par rapport au plan P tandis que la batterie 10 s'élève F20 selon Z, sous l'action des crochets 18 qui pivotent vers le haut, lors du vissage jusqu'à venir contre le châssis 11 et provoquer une connexion pilotée de la batterie 10. Dans la variante représentée, l'actionnement du verrou 17 est conditionné au déblocage F21 du mécanisme de sécurité du verrou 17 par les éléments de déblocage 24.

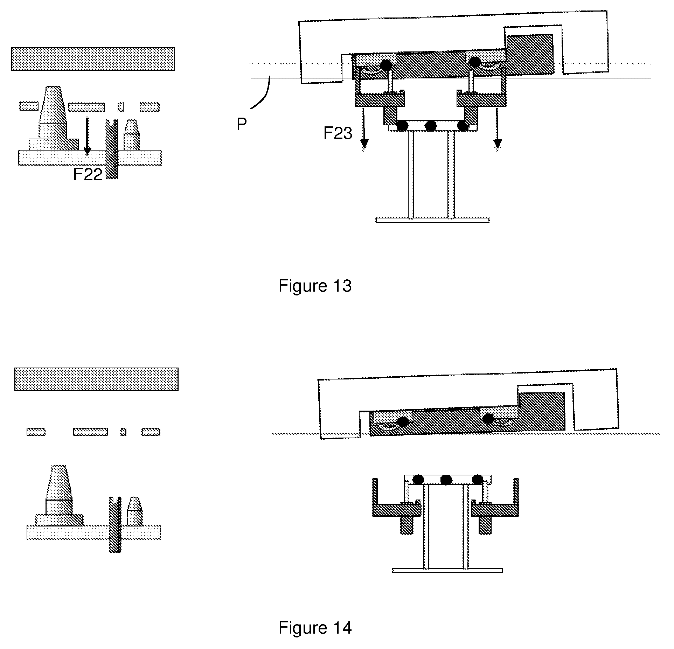

Enfin, les outils 12 sont abaissés F22 grâce à un déplacement F23 des éléments élévateurs 28 selon Z vers le bas, jusqu'à une perte de contact (figure 13) entre les éléments d'appui 15 et le dessous 25 du châssis 11. La mise en assiette cesse et le véhicule (et donc le châssis 11) reprend une orientation libre et quelconque par rapport au plan P. Puis le système de verrouillage et/ou de déverrouillage adopte une configuration globale à la figure 14 identique à celle illustrée à la figure 1.

Le concept décrit ci-dessus en application à une batterie et à un véhicule peut être étendu à toute charge lourde posée ou suspendue sous une structure et par exemple amenée à être mise en mouvement (par camion, fret ferroviaire, bateau, avion, cargo...).

La solution précédemment décrite présente en outre les avantages suivants :
- fournir des outils et une station d'échange de batterie économique,
- permettre de ne pas réinvestir l'outillage à chaque évolution de conception et/ou de position des fixations de batterie,
- limiter les risques de pannes liés aux défauts géométriques par l'utilisation de verrous 17 à crochets 18 élévateurs,
- mise en assiette du véhicule par référencement en Z sur le support de verrou 26 et non sur le véhicule, rendant celle-ci indépendante du véhicule et donc standardisable,
- le déverrouillage et le verrouillage peut s'effectuer avec une visseuse standard et non pas uniquement avec un système quart de tour nécessitant un outil spécifique,
- la batterie 10 peut être déposée sur un convoyeur 29 classique, donc peu cher,
- pendant l'évacuation de la batterie 10 déchargée (« vide »), la batterie 10 chargée (« pleine ») est approvisionnée: ces 2 opérations sont donc réalisées en temps masqué et non séquentiellement, d'où un gain sur le temps de cycle valorisable pour l'utilisateur.

## Revendications

1. Système de verrouillage et/ou de déverrouillage d'un objet, tel qu'une batterie d'alimentation (10) d'un moteur d'entraînement d'un véhicule automobile électrique ou hybride, en dessous d'une structure, telle qu'un châssis (11) du véhicule, le système comportant une pluralité d'outils (12), chaque outil comportant:
- des éléments (16) de verrouillage et/ou de déverrouillage destinés à actionner un verrou de fixation (17) entre une configuration de verrouillage bloquant l'objet sous la structure et une configuration de déverrouillage libérant l'objet par rapport à la structure;
le système étant **caractérisé en ce que** chaque outil comporte en outre:
- des éléments d'alignement (13, 14) dudit outil par rapport à l'objet selon un axe longitudinal (X) de la structure et selon un axe transversal (Y) de la structure ;
- des éléments d'appui (15) contre le dessous (25) de la structure permettant une mise en assiette de la structure autour de l'axe longitudinal (X) de la structure et/ou autour de l'axe transversal (Y) de la structure.

2. Système de verrouillage et/ou de déverrouillage selon la revendication 1, **caractérisé en ce que** les éléments d'appui (15) permettent un soulèvement de la structure selon un axe vertical (Z) à une hauteur (H) indépendante de la structure.

3. Système de verrouillage et/ou de déverrouillage selon l'une des revendications 1 et 2, **caractérisé en ce que** les éléments d'alignement (13, 14) sont configurés de sorte à coopérer avec des éléments de centrage (19, 20) que comporte l'objet, les éléments d'alignement s'insérant dans les éléments de centrage et/ou les éléments de centrage s'insérant dans les éléments d'alignement.

4. Système de verrouillage et/ou de déverrouillage selon l'une des revendications 1 à 3, **caractérisé en ce que** chaque outil comprend des éléments de déblocage (24) destinés à actionner un mécanisme de sécurité du verrou de fixation (17) entre une configuration de blocage dans laquelle le passage du verrou de fixation (17) d'une configuration à l'autre est inhibé et une configuration de déblocage dans laquelle le passage du verrou de fixation (17) d'une configuration à l'autre est autorisé.

5. Système de verrouillage et/ou de déverrouillage selon l'une des revendications 1 à 4, **caractérisé en ce que** les éléments d'appui (15) et/ou les éléments de déblocage (24) sont constitués par une extrémité supérieure d'au moins l'un des éléments d'alignement (13, 14).

6. Système de verrouillage et/ou de déverrouillage selon l'une des revendications 4 et 5, **caractérisé en ce que** les éléments de déblocage (24) sont configurés de sorte que la mise en contact des éléments d'appui (15) contre le dessous (25) de la structure, lors de la mise en assiette de la structure et éventuellement de son soulèvement, entraîne automatiquement l'actionnement, par les éléments de déblocage (24), du mécanisme de sécurité vers sa configuration de déblocage.

7. Système de verrouillage et/ou de déverrouillage selon l'une des revendications 1 à 6, **caractérisé en ce que** les éléments d'appui (15) sont configurés pour venir en contact, lors de la mise en assiette de la structure et éventuellement de son soulèvement, avec un support de verrou (26) interposé entre le verrou de fixation (17) et la structure.

8. Système de verrouillage et/ou de déverrouillage selon l'une des revendications 1 à 7, **caractérisé en ce que** chaque outil (12) comprend un élément de portage (27) destiné à supporter l'objet après sa libération par les verrous de fixation (17) par rapport à la structure.

9. Système de verrouillage et/ou de déverrouillage selon l'une des revendications 1 à 8, **caractérisé en ce qu'**il comprend des éléments élévateurs (28) sur lesquels les outils (12) sont montés, les éléments élévateurs étant configurés pour déplacer les outils entre :
- une position inférieure disposée sensiblement à proximité ou en dessous d'un convoyeur (29) assurant une fourniture d'objets à monter sur la structure tels que des batteries (10) électriquement chargées et une évacuation d'objets démontés de la structure tels que des batteries (10) électriquement déchargées,
- et une position supérieure où les outils (12) peuvent être en contact avec la structure pour assurer sa mise en assiette et éventuellement son soulèvement et peuvent actionner les verrous de fixation (17).

10. Dispositif de montage et/ou de démontage d'un objet, tel qu'une batterie d'alimentation (10) d'un moteur d'entraînement d'un véhicule automobile électrique ou hybride, en dessous d'une structure, telle qu'un châssis (11) du véhicule, le dispositif comportant un système de verrouillage et/ou de déverrouillage selon quelconque des revendications 1 à 9 et une pluralité de verrous de fixation (17) solidaires de l'objet et/ou de la structure, actionnables chacun entre une configuration de verrouillage bloquant l'objet sur la structure et une configuration de déverrouillage libérant l'objet par rapport à la structure, et agencés de sorte que les éléments (16) de verrouillage et/ou de déverrouillage de chaque outil (12) du système de verrouillage et/ou de déverrouillage actionnent l'un des verrous de fixation (17) pour le faire varier de configuration.

11. Procédé de démontage d'un objet, tel qu'une batterie d'alimentation (10) d'un moteur d'entraînement d'un véhicule automobile électrique ou hybride, en dessous d'une structure, telle qu'un châssis (11) du véhicule, le procédé comportant :
- une étape d'alignement d'une pluralité d'outils (12) par rapport à l'objet porté par la structure, selon un axe longitudinal (X) de la structure et selon un axe transversal (Y) de la structure ;
- une étape de mise en assiette de la structure autour de l'axe longitudinal (X) de la structure et/ou autour de l'axe transversal (Y) de la structure, par appui des outils contre le dessous (25) de la structure, et éventuellement de soulèvement de la structure selon un axe vertical (Z) de la structure ;
- une étape de déverrouillage dans laquelle chaque outil actionne un verrou de fixation (17) solidaire de l'objet et/ou de la structure d'une configuration de verrouillage bloquant initialement l'objet sur la structure vers une configuration de déverrouillage libérant l'objet par rapport à la structure.

12. Procédé de montage d'un objet, tel qu'une batterie d'alimentation (10) d'un moteur d'entraînement d'un véhicule automobile électrique ou hybride, en dessous d'une structure, telle qu'un châssis (11) du véhicule, le procédé comportant :
- une étape d'alignement d'une pluralité d'outils (12) par rapport à l'objet, selon un axe longitudinal (X) de la structure et selon un axe transversal (Y) de la structure ;
- une étape de mise en assiette de la structure autour de l'axe longitudinal (X) de la structure et/ou autour de l'axe transversal (Y) de la structure, par appui des outils contre le dessous (25) de la structure, et éventuellement de soulèvement de la structure selon un axe vertical (Z) de la structure ;
- une étape de verrouillage dans laquelle chaque outil actionne un verrou de fixation (17) solidaire de l'objet et/ou de la structure d'une configuration de déverrouillage libérant initialement l'objet par rapport à la structure vers une configuration de verrouillage bloquant l'objet sur la structure.

## Patentansprüche

1. Verriegelungs- und/oder Entriegelungssystem eines Gegenstands wie beispielsweise einer Versorgungsbatterie (10) eines Antriebsmotors eines Elektro- oder Hybridkraftfahrzeugs, unter einer Struktur, wie einem Fahrgestell (11) des Fahrzeugs, wobei das System mehrere Werkzeuge (12) aufweist, wobei jedes Werkzeug Folgendes aufweist:
- Verriegelungs- und/oder Entriegelungselemente (16), die dazu bestimmt sind, einen Befestigungsriegel (17) zwischen einer Verriegelungskonfiguration, die den Gegenstand unter der Struktur blockiert, und einer Entriegelungskonfiguration, die den Gegenstand relativ zu der Struktur freigibt, zu betätigen;
wobei das System **dadurch gekennzeichnet ist, dass** jedes Werkzeug ferner Folgendes aufweist:
- Ausrichtungselemente (13, 14) des Werkzeugs relativ zu dem Gegenstand entlang einer Längsachse (X) der Struktur und entlang einer Querachse (Y) der Struktur;
- Anschlagelemente (15) gegen die Unterseite (25) der Struktur, die ein Trimmen der Struktur um die Längsachse (X) der Struktur und/oder um die Querachse (Y) der Struktur ermöglichen.

2. Verriegelungs- und/oder Entriegelungssystem nach Anspruch 1, **dadurch gekennzeichnet, dass** die Anschlagelemente (15) ein Anheben der Struktur entlang einer vertikalen Achse (Z) auf eine Höhe (H), die von der Struktur unabhängig ist, ermöglichen.

3. Verriegelungs- und/oder Entriegelungssystem nach einem der Ansprüche 1 und 2, **dadurch gekennzeichnet, dass** die Ausrichtungselemente (13, 14) derart konfiguriert sind, um mit Zentrierelementen (19, 20) zusammenzuwirken, die der Gegenstand aufweist, wobei sich die Ausrichtungselemente in die Zentrierelemente einfügen und/oder sich die Zentrierelemente in die Ausrichtungselemente einfügen.

4. Verriegelungs- und/oder Entriegelungssystem nach einem der Ansprüche 1 bis 3, **dadurch gekennzeichnet, dass** jedes Werkzeug Freigabeelemente (24) aufweist, die dazu bestimmt sind, einen Sicherheitsmechanismus des Befestigungsriegels (17) zwischen einer Blockierungskonfiguration, in der der Übergang des Befestigungsriegels (17) von einer Konfiguration in die andere verhindert ist, und einer Freigabekonfiguration, in der der Übergang des Befestigungsriegels (17) von einer Konfiguration in die andere zugelassen ist, zu betätigen.

5. Verriegelungs- und/oder Entriegelungssystem nach einem der Ansprüche 1 bis 4, **dadurch gekennzeichnet, dass** die Anschlagelemente (15) und/oder die Freigabeelemente (24) durch ein oberes Ende von mindestens einem der Ausrichtungselemente (13, 14) gebildet sind.

6. Verriegelungs- und/oder Entriegelungssystem nach einem der Ansprüche 4 und 5, **dadurch gekennzeichnet, dass** die Freigabeelemente (24) derart konfiguriert sind, dass das In-Kontakt-Bringen der Anschlagelemente (15) gegen die Unterseite (25) der Struktur während des Trimmens der Struktur und eventuell ihres Anhebens automatisch das Betätigen durch die Freigabeelemente (24) des Sicherheitsmechanismus zu seiner Freigabekonfiguration bewirkt.

7. Verriegelungs- und/oder Entriegelungssystem nach einem der Ansprüche 1 bis 6, **dadurch gekennzeichnet, dass** die Anschlagelemente (15) konfiguriert sind, um während des Trimmens der Struktur und eventuell ihres Anhebens mit einem Riegelträger (26) in Kontakt zu kommen, der zwischen dem Befestigungsriegel (17) und der Struktur angeordnet ist.

8. Verriegelungs- und/oder Entriegelungssystem nach einem der Ansprüche 1 bis 7, **dadurch gekennzeichnet, dass** jedes Werkzeug (12) ein Trägerelement (27) aufweist, das dazu bestimmt ist, den Gegenstand nach seiner Freigabe durch die Befestigungsriegel (17) relativ zu der Struktur zu tragen.

9. Verriegelungs- und/oder Entriegelungssystem nach einem der Ansprüche 1 bis 8, **dadurch gekennzeichnet, dass** es Hubelemente (28) aufweist, an denen die Werkzeuge (12) montiert sind, wobei die Hubelemente konfiguriert sind, um die Werkzeuge zwischen Folgendem zu verschieben:
- einer unteren Position, die im Wesentlichen in der Nähe oder unter einem Förderband (29) angeordnet ist, das ein Bereitstellen von Gegenständen, die an der Struktur zu montieren sind, wie elektrisch geladene Batterien (10), und ein Beseitigen von Gegenständen, die von der Struktur abmontiert sind, wie elektrisch entladene Batterien (10), gewährleistet,
- und einer oberen Position, in der die Werkzeuge (12) mit der Struktur in Kontakt sein können, um ihr Trimmen und eventuell ihr Anheben zu gewährleisten, und die Befestigungsriegel (17) betätigen können.

10. Vorrichtung zum Montieren und/oder Abmontieren eines Gegenstands wie beispielsweise einer Versorgungsbatterie (10) eines Antriebsmotors eines Elektro- oder Hybridkraftfahrzeugs, unter einer Struktur, wie einem Fahrgestell (11) des Fahrzeugs, wobei die Vorrichtung ein Verriegelungs- und/oder Entriegelungssystem nach einem der Ansprüche 1 bis 9 und mehrere Befestigungsriegel (17) aufweist, die mit dem Gegenstand und/oder der Struktur fest verbunden sind, die jeweils zwischen einer Verriegelungskonfiguration, die den Gegenstand an der Struktur blockiert, und einer Entriegelungskonfiguration, die den Gegenstand relativ zu der Struktur freigibt, betätigbar sind und derart angeordnet sind, dass die Verriegelungs- und/oder Entriegelungselemente (16) von jedem Werkzeug (12) des Verriegelungs- und/oder Entriegelungssystems einen der Befestigungsriegel (17) betätigen, damit er die Konfiguration ändert.

11. Verfahren zum Abmontieren eines Gegenstands, wie beispielsweise einer Versorgungsbatterie (10) eines Antriebsmotors eines Elektro- oder Hybridkraftfahrzeugs, unter einer Struktur, wie einem Fahrgestell (11) des Fahrzeugs, wobei das Verfahren Folgendes aufweist:
- einen Schritt des Ausrichtens von mehreren Werkzeugen (12) relativ zu dem Gegenstand, der von der Struktur getragen wird, entlang einer Längsachse (X) der Struktur und entlang einer Querachse (Y) der Struktur;
- einen Schritt des Trimmens der Struktur um die Längsachse (X) der Struktur und/oder um die Querachse (Y) der Struktur durch Anschlagen der Werkzeuge gegen die Unterseite (25) der Struktur, und eventuell des Anhebens der Struktur entlang einer vertikalen Achse (Z) der Struktur;
- einen Schritt des Entriegelns, bei dem jedes Werkzeug einen Befestigungsriegel (17), der mit dem Gegenstand und/oder der Struktur fest verbunden ist, von einer Verriegelungskonfiguration, die den Gegenstand anfangs an der Struktur blockiert, zu einer Entriegelungskonfiguration, die den Gegenstand relativ zu der Struktur freigibt, betätigt.

12. Verfahren zum Montieren eines Gegenstands, wie beispielsweise einer Versorgungsbatterie (10) eines Antriebsmotors eines Elektro- oder Hybridkraftfahrzeugs, unter einer Struktur, wie einem Fahrgestell (11) des Fahrzeugs, wobei das Verfahren Folgendes aufweist:
- einen Schritt des Ausrichtens von mehreren Werkzeugen (12) relativ zu dem Gegenstand entlang einer Längsachse (X) der Struktur und entlang einer Querachse (Y) der Struktur;
- einen Schritt des Trimmens der Struktur um die Längsachse (X) der Struktur und/oder um die Querachse (Y) der Struktur durch Anschlagen der Werkzeuge gegen die Unterseite (25) der Struktur, und eventuell des Anhebens der Struktur entlang einer vertikalen Achse (Z) der Struktur;
- einen Schritt des Verriegelns, bei dem jedes Werkzeug einen Befestigungsriegel (17), der mit dem Gegenstand und/oder der Struktur fest verbunden ist, von einer Entriegelungskonfiguration, die den Gegenstand anfangs relativ zu der Struktur freigibt, zu einer Verriegelungskonfiguration, die den Gegenstand an der Struktur blockiert, betätigt.

## Claims

1. System for locking and/or unlocking an object, such as a power supply battery (10) of a drive motor of an electric or hybrid motor vehicle, below a structure such as a chassis (11) of the vehicle, the system comprising a plurality of tools (12), each tool comprising:
- locking and/or unlocking elements (16) intended for actuating a fixing bolt (17) between a locking configuration, blocking the object below the structure, and an unlocking configuration, releasing the object in relation to the structure;
the system being **characterized in that** each tool further comprises:
- elements (13, 14) for aligning said tool in relation to the object along a longitudinal axis (X) of the structure and along a transverse axis (Y) of the structure;
- elements (15) for bearing against the underside (25) of the structure, allowing seating of the structure around the longitudinal axis (X) of the structure and/or around the transverse axis (Y) of the structure.

2. Locking and/or unlocking system according to Claim 1, **characterized in that** the bearing elements (15) allow lifting of the structure along a vertical axis (Z) to a height (H) independent of the structure.

3. Locking and/or unlocking system according to one of Claims 1 and 2, **characterized in that** the alignment elements (13, 14) are configured so as to cooperate with centering elements (19, 20) integrated in the object, the alignment elements being inserted in the centering elements and/or the centering elements being inserted in the alignment elements.

4. Locking and/or unlocking system according to any of Claims 1 to 3, **characterized in that** each tool comprises release elements (24) intended for actuating a safety mechanism of the fixing bolt (17) between a blocking configuration, in which the fixing bolt (17) cannot be transferred from one configuration to the other, and a release configuration, in which the fixing bolt (17) can be transferred from one configuration to the other.

5. Locking and/or unlocking system according to any of Claims 1 to 4, **characterized in that** the bearing elements (15) and/or the release elements (24) are formed by an upper end of at least one of the alignment elements (13, 14).

6. Locking and/or unlocking system according to one of Claims 4 and 5, **characterized in that** the release elements (24) are configured such that contact of the bearing elements (15) against the underside (25) of the structure, on the seating of the structure and where applicable during its lifting, automatically initiates the actuation, via the release elements (24), of the safety mechanism toward its release configuration.

7. Locking and/or unlocking system according to any of Claims 1 to 6, **characterized in that** the bearing elements (15) are configured to come into contact, on the seating of the structure and where applicable during its lifting, with a bolt support (26) interposed between the fixing bolt (17) and the structure.

8. Locking and/or unlocking system according to any of Claims 1 to 7, **characterized in that** each tool (12) comprises a carrier element (27) designed to support the object after its release by the fixing bolts (17) in relation to the structure.

9. Locking and/or unlocking system according to any of Claims 1 to 8, **characterized in that** it comprises lifting elements (28) on which the tools (12) are mounted, the lifting elements being configured to move the tools between:
- a lower position arranged substantially next to or below a conveyor (29) ensuring a supply of objects to be mounted on the structure, such as electrically charged batteries (10), and an evacuation of objects removed from the structure, such as electrically discharged batteries (10),
- and an upper position in which the tools (12) may be in contact with the structure to ensure its seating and where applicable its lifting, and can actuate the fixing bolts (17).

10. Device for mounting and/or removal of an object, such as a power supply battery (10) for a drive motor of an electric or hybrid motor vehicle, below a structure such as a chassis (11) of the vehicle, the device comprising a locking and/or unlocking system according to any of Claims 1 to 9, and a plurality of fixing bolts (17) integral with the object and/or the structure, each of which can be actuated between a locking configuration, blocking the object on the structure, and an unlocking configuration, releasing the object in relation to the structure, and arranged such that the locking and/or unlocking elements (16) of each tool (12) of the locking and/or unlocking system actuate one of the fixing bolts (17) to change its configuration.

11. Method for removal of an object, such as a power supply battery (10) of a drive motor of an electric or hybrid motor vehicle, below a structure such as a chassis (11) of the vehicle, the method comprising:
- a step of aligning a plurality of tools (12) in relation to the object carried by the structure along a longitudinal axis (X) of the structure and along a transverse axis (Y) of the structure;
- a step of seating the structure around the longitudinal axis (X) of the structure and/or around the transverse axis (Y) of the structure by bringing the tools to bear against the underside (25) of the structure, and where applicable by lifting the structure along a vertical axis (Z) of the structure;
- an unlocking step in which each tool actuates a fixing bolt (17), integral with the object and/or the structure, from a locking configuration, initially blocking the object on the structure, to an unlocking configuration, releasing the object in relation to the structure.

12. Method for mounting an object, such as a power supply battery (10) of a drive motor of an electric or hybrid motor vehicle, below a structure such as a chassis (11) of the vehicle, the method comprising:
- a step of aligning a plurality of tools (12) in relation to the object along a longitudinal axis (X) of the structure and along a transverse axis (Y) of the structure;
- a step of seating the structure around the longitudinal axis (X) of the structure and/or around the transverse axis (Y) of the structure by bringing the tools to bear against the underside (25) of the structure, and where applicable by lifting the structure along a vertical axis (Z) of the structure;
- a locking step in which each tool actuates a fixing bolt (17), integral with the object and/or the structure, from an unlocking configuration, initially releasing the object in relation to the structure, to a locking configuration, blocking the object on the structure.
